# EUROPEAN PATENT SPECIFICATION

(11) **EP 2 729 979 B1**
(45) Date of publication and mention of the grant of the patent: **13.12.2017**
(21) Application number: 11869297.9
(22) Date of filing: 08.07.2011
(51) Int. Cl.: H01M 8/1004, H01M 4/92

(54) **LOW PLATINUM LOAD ELECTRODE**
PLATINARME ELEKTRODE
ÉLECTRODE À FAIBLE CHARGE DE PLATINE

(43) Date of publication of application: 14.05.2014
(73) Proprietor: Audi AG, 85045 Ingolstadt (DE)
(72) Inventor: MASON, Robert Darling, South Windsor, CT 06074 (US); KANDOI, Shampa, Manchester, CT 06042 (US); O'NEILL, Jonathan Daniel, Manchester, CT 06024 (US)
(86) International application number: PCT/US2011/001195
(87) International publication number: WO 2013/009275

(56) References cited:
- US-A- 5 272 017
- US-A1- 2005 163 920
- US-A1- 2010 291 461
- US-A1- 2011 008 702
- US-A1- 2011 143 254
- GASTEIGER H A ET AL: "Activity benchmarks and requirements for Pt, Pt-alloy, and non-Pt oxygen reduction catalysts for PEMFCs", APPLIED CATALYSIS B: ENVIRONMENTAL, ELSEVIER, AMSTERDAM, NL, vol. 56, no. 1-2, 10 March 2005 (2005-03-10), pages 9-35, XP027813661, ISSN: 0926-3373 [retrieved on 2005-03-10]
- AHLUWALIA R K ET AL: "Rapid self-start of polymer electrolyte fuel cell stacks from subfreezing temperatures", JOURNAL OF POWER SOURCES, ELSEVIER SA, CH, vol. 162, no. 1, 8 November 2006 (2006-11-08), pages 502-512, XP027938382, ISSN: 0378-7753 [retrieved on 2006-11-08]
- HITOSHI NAKAJIMA ET AL: "Effect of the Content of Platinum and Carbon Support in Cathode Catalyst on the Cell Performance under Low and High Relative Humidity", ECS TRANSACTIONS, 1 January 2011 (2011-01-01), pages 2049-2059, XP55161267, ISSN: 1938-5862, DOI: 10.1149/1.3635735

## Description

### BACKGROUND

A proton exchange membrane fuel cell (PEMFC) includes an anode, a cathode and a proton exchange membrane (PEM) between the anode and cathode. In one example, hydrogen gas is fed to the anode and air or pure oxygen is fed to the cathode. However, it is recognized that other types of fuels and oxidants can be used. At the anode, an anode catalyst causes the hydrogen molecules to split into protons (H⁺) and electrons (e⁻). The protons pass through the PEM to the cathode while the electrons travel through an external circuit to the cathode, resulting in production of electricity. At the cathode, a cathode catalyst causes the oxygen molecules to react with the protons and electrons from the anode to form water, which is removed from the system. The anode catalyst and cathode catalyst are commonly formed of platinum supported on carbon. The platinum catalyst is only active when it is accessible to protons, electrons and the reactant (i.e., hydrogen or oxygen).

Platinum and other suitable noble metal catalysts are expensive. In order to reduce costs, it is desirable to use electrodes with low platinum loads. Much work has been conducted to reduce the platinum loading in the cathode in order to reduce manufacturing costs. Low platinum loadings, however, result in high power performance losses that exceed that predicted for kinetic activation losses alone. High-performing low platinum load electrodes cannot be formed by simply reducing the platinum loading of an electrode. Work has been conducted to improve the kinetics of catalyst layers in order to improve the efficiency of the fuel cell.

GASTEIGER H A ET AL: "Activity benchmarks and requirements for Pt, Pt-alloy, and non-Pt oxygen reduction catalysts for PEMFCs" (APPLIED CATALYSIS B: ENVIRONMENTAL; ELSEVIER, AMSTERDAM, NL, vol. 56, no. 1-2, March 2005 (2005-03-10)) describes the preparation of electrodes comprising a low platinum loading.

AHLUWALIA R K ET AL: "Rapid self-start of polymer electrolyte fuel cell stacks from subfreezing temperatures" (JOURNAL OF POWER SOURCES, ELSEVIER SA, CH, vol. 162, no. 1,8 November 2006 (2006-11-08), pages) describes a model calculation for fuel cell electrodes comprising low platinum loading.

Hitoshi Nakajima ET AL: "Effect of the Content of Platinum and Carbon support in Cathode Catalyst on the Cell Performance under Low and High Relative Humidity" (ECS TRANSACTIONS, 1 January 2011 (2011-01-01), pages 2049-2059) evaluates the fuel cell performance under low or high relative humidity. Low platinum loaded catalyst layers were examined.

US 2011/143254 describes a fuel cell having electrodes consisting of a first layer and a second layer with different properties like porosity, thickness, catalyst, etc. The first surface of the first layer is in contact with an ion-conducting membrane and the second layer is in intimate contact with the opposite surface of the first layer.

### SUMMARY

The present invention concerns an electrode according to claim 1 and a membrane electrode assembly according to claim 6. Preferred embodiments are contained in the dependent claims.

An electrode for an electrochemical cell includes platinum catalysts, carbon support particles and an ionomer. The carbon support particles support the platinum catalysts, and the ionomer connects the platinum catalysts. The electrode has a platinum loading less than 0.2 mg/ cm² and an ionomer-to-carbon ratio between 0.5 and 0.9.

A membrane electrode assembly includes a proton exchange membrane, a cathode layer and an anode layer. The cathode layer includes platinum catalysts, carbon support particles for supporting the platinum catalysts and an ionomer connecting the platinum catalysts. The cathode layer has a platinum loading less than 0.2 mg/cm² and an ionomer-to-carbon ratio between 0.5 and 0.9. The anode layer includes platinum catalysts, carbon support particles for supporting the platinum catalysts and an ionomer connecting the platinum catalysts.

### BRIEF DESCRIPTION OF THE DRAWINGS

FIG. 1 is a perspective view of a fuel cell repeat unit.
FIG. 2 is an enlarged perspective view of the ionomer cathode catalyst layer of the fuel cell repeat unit of FIG. 1.

### DETAILED DESCRIPTION

Fuel cells convert chemical energy to electrical energy using one or more fuel cell repeat units. The fuel cell repeat unit described herein includes an electrode with a low platinum load. The electrode has a platinum loading less than about 0.2 mg/cm². The electrode includes platinum catalysts, carbon support particles and an ionomer. The ionomer-to-carbon ratio is tailored to provide an efficient electrode with a low platinum load.

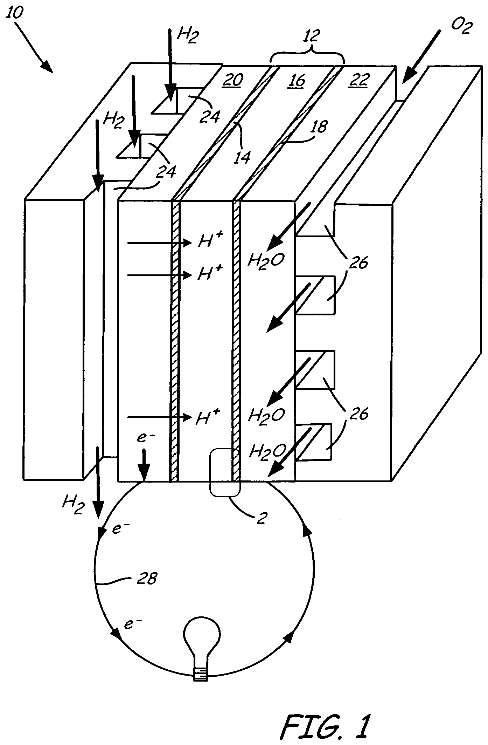

FIG. 1 illustrates a perspective view of one example fuel cell repeat unit 10, which includes membrane electrode assembly (MEA) 12 (having anode catalyst layer (CL) 14, membrane 16 and cathode catalyst layer (CL) 18), anode gas diffusion layer (GDL) 20, cathode gas diffusion layer (GDL) 22, anode flow field 24 and cathode flow field 26. Fuel cell repeat unit 10 can have coolant flow fields adjacent to anode flow field 24 and cathode flow field 26. Coolant flow fields are not illustrated in FIG. 1.

Anode GDL 20 faces anode flow field 24 and cathode GDL 22 faces cathode flow field 26. Anode CL 14 is positioned between anode GDL 20, and membrane 16 and cathode CL 18 is positioned between cathode GDL 22 and membrane 16. In one example, fuel cell repeat unit 10 can be a polymer electrolyte membrane (PEM) fuel cell that uses hydrogen fuel (*e.g.,* hydrogen gas) and oxygen oxidant (*e.g.,* oxygen gas or air). It is recognized that fuel cell repeat unit 10 can use alternative fuels and/or oxidants.

In operation, anode GDL 20 receives hydrogen gas (H₂) by way of anode flow field 24. Anode CL 14, which contains a catalyst such as platinum, causes the hydrogen molecules to split into protons (H⁺) and electrons (e⁻). The protons and electrons travel to cathode CL 18; the protons pass through membrane 16 to cathode CL 18, while the electrons travel through external circuit 28, resulting in a production of electrical power. Air or pure oxygen (O₂) is supplied to cathode GDL 22 through cathode flow field 26. At cathode CL 18, oxygen molecules react with the protons and electrons from anode CL 14 to form water (H₂O), which then exits fuel cell 10, along with excess heat.

Membrane 16 is a semi-permeable membrane located between anode CL 14 and cathode CL 18. Membrane 16 allows movement of protons and water but does not conduct electrons. Protons and water from anode CL 14 can move through membrane 16 to cathode CL 18. Membrane 16 can be formed of an ionomer. An ionomer is a polymer with ionic properties. In one example, membrane 16 is formed of a perfluorosulfonic acid (PFSA)-containing ionomer, such as Nafion® by E.I. DuPont, USA. PFSA polymers are composed of fluorocarbon backbones with sulfonate groups attached to short fluorocarbon side chains.

In another example, membrane 16 is formed of a hydrocarbon ionomer. In general, the main chains of hydrocarbon ionomers do not contain large amounts of fluorine, unlike PFSA ionomers which have highly fluorinated backbones. A hydrocarbon ionomer is an ionomer having a main chain which contains hydrogen and carbon, and which may also contain a small mole fraction of hetero atoms such as oxygen, nitrogen, sulfur, and/or phosphorus. These hydrocarbon ionomers primarily include aromatic and aliphatic ionomers. Examples of suitable aromatic ionomers include but are not limited to sulfonated polyimides, sulfoalkylated polysulfones, poly(β-phenylene) substituted with sulfophenoxy benzyl groups, and polybenzimidazole ionomers. Non-limiting examples of suitable aliphatic ionomers are those based upon vinyl polymers, such as cross-linked poly(styrene sulfonic acid), poly(acrylic acid), poly(vinylsulfonic acid), poly(2-acrylamide-2-methylpropanesulfonic acid) and their copolymers.

The composition of membrane 16 affects the operating temperature of fuel cell repeat unit 10. For example, hydrocarbon ionomers typically have a higher glass transition temperature than PFSA ionomers, which enables a hydrocarbon ionomer membrane 16 to be operated at a higher temperature than a PFSA ionomer membrane 16.

Cathode CL 18 is adjacent to the cathode side of membrane 16. Cathode CL 18 includes an ionomer and a catalyst, as described further below. The catalyst of cathode CL 18 promotes electrochemical reduction of oxidant (i.e., oxygen). Example catalysts for cathode CL 18 include carbon-supported platinum particles, carbon-supported alloys of platinum and carbon-supported platinum intermetallics. Cathode CL 18 has a low platinum loading, such as less than 0.2 milligrams platinum per square centimeter of cathode CL 18. In one embodiment, cathode CL 18 has a platinum loading between 0.05 mg/cm² and 0.15 mg/cm². In another embodiment, cathode CL18 has a platinum loading of about 0.1 mg/cm². Low platinum loading reduces the fuel cell costs. However, it has been observed that some low platinum loading electrodes experience higher than expected oxygen transport losses.

Anode CL 14 is adjacent to the anode side of membrane 16, and opposite cathode CL 18. Anode CL 14 includes a catalyst. The catalyst of anode CL 14 promotes electrochemical oxidation of fuel (i.e., hydrogen). Example catalysts for anode CL 14 include carbon-supported platinum particles. Anode CL 14 can also include an ionomer. Anode CL 14 can have a structure similar to that described above for cathode CL 18, although anode CL 14 and cathode CL 18 can have different compositions.

Fuel cell performance losses prevent a fuel cell from operating at its theoretical efficiency. As discussed above, low catalyst loading electrodes generally have performance losses that are higher than those predicted based on kinetic activation losses alone. This suggests that at least one source of overpotential other than kinetics increases with decreasing catalyst loading. For example, it has been found that oxygen transfer losses are greater in low catalyst loading electrodes, while ohmic losses are lower in thin, low catalyst loading electrodes. More specifically, it has been found that oxygen transport losses, as measured by oxygen gain, are greater for low catalyst loading electrodes. The oxygen gain is defined as the difference in performance measured on oxygen and air on the cathode and an increase in the oxygen gain usually results from higher oxygen transport losses. The oxygen gain has been observed to increase with decreasing relative humidity, indicating that the oxygen transport losses are primarily associated with oxygen transport through the ionomer. Typically, in a hydrogen-air fuel cell, the hydrogen oxidation reaction (HOR) occurring at anode CL 14 has a significantly lower overpotential at a given current than the oxidation reduction reaction (ORR) of cathode CL 18.

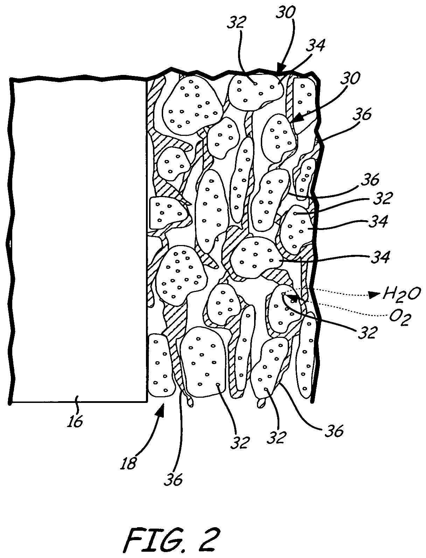

FIG. 2 is an enlarged schematic view of a portion of membrane 16 and cathode CL 18 which includes catalysts 30 (having catalyst particles 32 and catalyst support 34) and ionomer 36. Cathode CL 18 is a matrix of catalyst supports 34, ionomer 36 and platinum catalyst particles 32. Ionomer 36 of cathode CL 18 contacts catalysts 30 to form a layer having catalyst particles 32 dispersed throughout. As illustrated, cathode CL 18 has a porous structure which enables water to be removed from the system and gas to move through cathode CL 18. In this example, cathode CL 18 is formed of one discrete catalyst layer. In one example, cathode CL 18 is between 2 and 5 µm thick.

Catalyst supports 34 support catalyst particles 32. In one example, catalyst supports 34 are formed from activated carbon or carbon black, such as Ketjen Black (KB). Catalyst supports 34 generally have a diameter between about 10 nanometers and about 100 nanometers.

Catalyst particles 32 are deposited on catalyst supports 34. Catalyst particles 32 promote the oxidation reduction reaction (ORR) according to the oxidation reduction reaction: O₂ + 4H⁺ + 4e⁻ → 2H₂O. For example, catalyst particles 32 can be platinum and alloys thereof. To maximize the activated catalyst surface area, catalysts 30 can be formed with a plurality of catalyst particles 32 on a single catalyst support 34. Alternatively, catalysts 30 can be formed of a plurality of catalyst supports 34 supporting finely dispersed catalyst particles 32.

Ionomer 36 in cathode CL 18 connects electrolyte 16 to catalyst particles 32 on an ionic conductor level. As illustrated in FIG. 2, ionomer 36 creates a scaffolding structure between catalyst supports 34 of catalysts 30. Ionomer 36 creates a porous structure that enables gas to travel through cathode CL 18 and water to be removed from cathode CL 18. Ionomer 36 also transfers protons from electrolyte 16 to active catalyst sites on catalyst particles 32.

Due to the high cost of platinum, electrodes with low platinum loads are desirable. However, merely reducing the amount of platinum in the catalyst layer of an electrode yields an inefficient electrode and fuel cell. Reducing the amount of platinum in an electrode increases the kinetic overpotential consistent with the Tafel equation. Additionally, oxygen transport losses also increase as the platinum loading is reduced. This additional transport loss appears to be inversely proportional to the platinum surface area.

Applicants discovered that reducing the ionomer-to-carbon ratio of the electrode minimizes some of the drawbacks of reduced platinum loading and provides a low platinum load electrode with acceptable performance and efficiency. Typically, lowering the ionomer-to-carbon ratio leads to an increase in ohmic losses at the electrode due to the decreased ionomer concentration. However, Applicants unexpectedly found that reducing the ionomer-to-carbon ratio in a low platinum load electrode did not produce the expected ohmic losses.

Decreasing the ionomer-to-carbon ratio decreases the thickness of ionomer film 36 surrounding catalysts 30. This decreased ionomer film thickness generally reduces oxygen transport losses within the catalyst layer. At the same time, the reduced ionomer-to-carbon ratio normally yields increased ohmic losses in the catalyst layer. However, electrodes with low platinum loads generally have thinner catalyst layers than normal. For example, in an electrode having a low platinum load (*e.g.,* 0.1 mg/cm²), the catalyst layer is usually very thin (2-5µm). A catalyst layer with 0.4 mg/cm² of platinum is about four times thicker than a catalyst layer with 0.1 mg/cm² of platinum. Ohmic losses scale with electrode thickness, thus a thinner catalyst layer provides an electrode subject to diminished ohmic penalties. Applicants suspect that ohmic losses due to the thickness of the catalyst layer play a smaller role in low platinum load (i.e. thinner) electrodes and the primary contributor to ohmic losses occurs in the ionomer film around catalysts 30. Additionally, gas transport losses are typically the limiting process in low platinum load electrodes.

In electrodes having a normal platinum load (0.4 mg/cm²), the ionomer-to-carbon ratio is usually greater than 1.2. While the optimum amount of ionomer 36 for a low platinum load electrode depends on the operating conditions of the fuel cell, a particular ionomer-to-carbon ratio range provides an efficient low platinum electrode. In the present invention, the ionomer-to-carbon ratio of a catalyst layer is between 0.5 and 0.9. In another embodiment, the ionomer-to-carbon ratio of a catalyst layer is between 0.6 and 0.8. In still another embodiment, the ionomer-to-carbon ratio of a catalyst layer is between 0.6 and 0.7. These values represent commercially practicable ionomer-to-carbon ratios. While lower ionomer-to-carbon ratios could prove more optimal theoretically, catalyst supports 34 must be fully coated with ionomer 36. The minimum film thickness for ionomer 36 is about 3 nanometers (nm). This minimum thickness essentially prevents workable ionomer-to-carbon ratios below about 0.5.

In addition to finding exemplary ionomer-to-carbon ratios for low platinum load electrodes, Applicants examined ionomer equivalent weights. The equivalent weight (EW) of an ionomer is the molecular weight that contains 1 mol of ionic groups and indicates the ionic content of the polymer. A low EW ionomer has a high ionic content relative to a high EW ionomer, and is therefore more conductive. Decreasing EW lowers ionomer phase resistances, but may increase gas phase transport resistance due to flooding or ionomer expansion into pores of the catalyst layer. Applicants' experimental results showed that ionomers with an EW less than 1100 had superior transport properties compared with higher EW ionomers.

In one embodiment of the present invention, ionomer 36 of a catalyst layer is a PFSA or hydrocarbon polymer having an EW between about 700 and about 1100. In another embodiment, ionomer 36 is a PFSA or hydrocarbon polymer having an EW between 800 and 900. In still another embodiment, ionomer 36 is a PFSA or hydrocarbon polymer having an EW between 820 and 840. PFSA ionomers have a high gas permeability, but also a high affinity for platinum. Thus, although oxygen can permeate easily through the PFSA ionomer to catalyst particles 32, catalyst particles 32 also dissolve and move through the PFSA ionomer as ionic species. In contrast to PFSA ionomers, hydrocarbon ionomers generally have a low gas permeability and a low solubility for platinum. Additionally, hydrocarbon ionomers are thermally and dimensionally stable ionomers, functioning as an effective scaffolding in porous cathode CL 18. Thus, a mixture of PFSA and hydrocarbon ionomer with the PFSA preferentially coating catalyst particles 32 may be beneficial.

In addition to the above mentioned ionomer characteristics, Applicants also studied the effects of varying the metal weight percent of the electrode (i.e. the percentage of platinum in the electrode). Increasing the metal weight percent of the electrode (i.e. increasing the relative amount of platinum present in the electrode) provides a thinner electrode, which reduces the gas phase transport losses and ohmic losses. Gas phase transport losses through the thickness of the electrode are relatively minor at low platinum loading. Changing the metal weight percent of an electrode has no effect on oxygen transport losses in the ionomer phase in contrast to generally accepted models of oxygen transport in fuel cell catalyst layers.

In one embodiment of the present invention, the metal weight percent of a carbon-supported catalyst layer is between 20% and 70%. For example, cathode CL 18 contains carbon-supported platinum particles having between about 20 weight percent platinum with about 80 weight percent carbon and about 70 weight percent platinum with about 30 weight percent carbon. The amount of ionomer added to the carbon-supported platinum catalyst is adjusted proportionally to the amount of carbon to achieve the desired ionomer-to-carbon ratio. In another embodiment, the metal weight percent is between 40% and 60%. In still another embodiment, the metal weight percent is 50%. Increasing the metal weight percent above about 70% results in a thinner catalyst layer, but may cause manufacturing difficulties or result in an uneven loading of platinum in the catalyst layer. Decreasing the metal weight percent below about 20% results in a thicker catalyst layer that increases mass transport resistance and ohmic losses.

Although adjusting each electrode characteristic studied by Applicants (ionomer-to-carbon ratio, ionomer EW and catalyst layer metal weight percent) has advantages and drawbacks, when these characteristics are controlled within the prescribed ranges, the effect of any individual drawbacks is mitigated while amplifying the benefits of the characteristics as a whole. Accordingly, by balancing each of the electrode characteristics, drawbacks can be minimized to provide an efficient low platinum electrode. For example, lowering the ionomer-to-carbon ratio reduces oxygen transport losses while increasing ohmic losses. The increase in ohmic losses can be mitigated by using a high platinum-to-carbon ratio to make the electrode thinner.

To summarize, the present invention provides an efficient low platinum load electrode by utilizing a reduced ionomer-to-carbon ratio in the catalyst layer. Additionally, the ionomer equivalent weight and the metal weight percent of the catalyst layer can be modified to further increase the efficiency of a low platinum load electrode.

## Claims

1. An electrode for an electrochemical cell (10), the electrode comprising:
platinum catalysts (32);
carbon support particles (34) for supporting the platinum catalysts (32); and
an ionomer (36) connecting the platinum catalysts (32),
wherein the electrode has a platinum loading less than 0.2 mg/cm², an ionomer-to-carbon ratio between 0.5 and 0.9 and a thickness between 2 and 5 µm **characterized in that**
the electrode is formed of one discrete layer, and the ionomer (36) is configured to connect the platinum catalysts (32) to a proton exchange membrane (16).

2. The electrode of claim 1 , wherein the ionomer (36) has an equivalent weight between 700 and 1100.

3. The electrode of claim 1, wherein the electrode has a platinum loading between 0.05 mg/cm² and 0.15 mg/cm².

4. The electrode of claim 3, wherein the electrode has a platinum loading of 0.1 mg/cm².

5. The electrode of claim 1, wherein the electrode has a metal weight percent of between 20% and 70%.

6. A membrane electrode assembly (12) comprising:
a proton exchange membrane (16);
a cathode layer (18) comprising:
platinum catalysts (32);
carbon support particles (34) for supporting the platinum catalysts (32); and
an ionomer (36) connecting the platinum catalysts (32),
wherein the cathode layer (18) has a platinum loading less than 0.2 mg/cm² and an ionomer-to-carbon ratio between 0.5 and 0.9; and
an anode layer (14) comprising:
platinum catalysts (32); and
carbon support particles (34) for supporting the platinum catalysts (32); and
an ionomer (36) connecting the platinum catalysts (32);
wherein the layers (14, 18) have a thickness between 2 and 5 µm, **characterized in that**
the anode layer (14) and the cathode layer (18) is formed of one discrete layer and the ionomer (36) of the layers (14, 18) connects the platinum catalysts (32) to the proton exchange membrane (16).

7. The membrane electrode assembly (12) of claim 6, wherein the anode layer (14) has a platinum loading less than 0.2 mg/cm² and an ionomer-to-carbon ratio between 0.5 and 0.9.

8. The electrode of claim 1 or the membrane electrode assembly (12) of claim 6, wherein the ionomer-to- carbon ratio is between 0.6 and 0.8.

9. The electrode of claim 8 or the membrane electrode assembly (12) of claim 8, wherein the ionomer-to-carbon ratio is between 0.6 and 0.7.

10. The electrode of claim 5 or the membrane electrode assembly (12) of claim 6, wherein the electrode has a metal weight percent of between 40% and 60%.

11. The electrode of claim 5 or the membrane electrode assembly (12) of claim 10, wherein the electrode has a metal weight percent of 50%.

12. The electrode of claim 2 or the membrane electrode assembly (12) of claim 6, wherein the ionomer (36) has an equivalent weight between 800 and 900.

13. The electrode of claim 2 or the membrane electrode assembly (12) of claim 12, wherein the ionomer (36) has an equivalent weight between 820 and 840.

## Patentansprüche

1. Elektrode für eine elektrochemische Zelle (10), wobei die Elektrode umfasst:
Platinkatalysatoren (32);
Kohlenstoffträgerteilchen (34) zum Tragen der Platinkatalysatoren (32); und
ein lonomer (36), das die Platinkatalysatoren (32) verbindet,
wobei die Elektrode eine Platinbeladung von weniger als 0,2 mg/cm² und ein Ionomer-zu-Kohlenstoff-Verhältnis zwischen etwa 0,5 und 0,9 und eine Dicke zwischen 2 µm und 5 µm aufweist, **dadurch gekennzeichnet, dass** die Elektrode aus einer diskreten Schicht gebildet ist und das lonomer (36) dazu eingerichtet ist, die Platinkatalysatoren (32) mit einer Protonenaustauschmembran (16) zu verbinden.

2. Elektrode nach Anspruch 1, wobei das lonomer (36) ein Äquivalentgewicht zwischen 700 und 1100 aufweist.

3. Elektrode nach Anspruch 1, wobei die Elektrode eine Platinbeladung zwischen 0,05 mg/cm² und 0,15 mg/cm² aufweist.

4. Elektrode nach Anspruch 3, wobei die Elektrode eine Platinbeladung von 0,1 mg/cm² aufweist.

5. Elektrode nach Anspruch 1, wobei die Elektrode zwischen 20% und 70% Metallgewichtsprozent aufweist.

6. Membranelektrodenanordnung (12) umfassend:
eine Protonenaustauschmembran (16);
eine Kathodenschicht (18), umfassend:
Platinkatalysatoren (32);
Kohlenstoffträgerteilchen (34) zum Tragen der Platinkatalysatoren (32); und
ein die Platinkatalysatoren (32) verbindendes lonomer (36),
wobei die Kathodenschicht (18) eine Platinbeladung von weniger als etwa 0,2 mg/cm² und ein Ionomer-zu-Kohlenstoff-Verhältnis zwischen 0,5 und 0,9 aufweist; und
eine Anodenschicht (14), umfassend:
Platinkatalysatoren (32); und
Kohlenstoffträgerteilchen (34) zum Tragen der Platinkatalysatoren (32); und ein lonomer (36), das die Platinkatalysatoren (32) verbindet;
wobei die Schichten (14, 18) eine Dicke zwischen 2 und 5 µm aufweisen,
**dadurch gekennzeichnet, dass** die Anodenschicht (14) und die Kathodenschicht (18) aus einer diskreten Schicht gebildet sind und das lonomer (36) der Schichten (14, 18) die Platinkatalysatoren (32) mit der Protonenaustauschmembran (16) verbindet.

7. Membranelektroderianordnung (12) nach Anspruch 6, wobei die Anodenschicht (14) eine Platinbeladung von weniger als 0,2 mg/cm² und ein lonomer-zu-Kohlenstoff-Verhältnis zwischen 0,5 und 0,9 aufweist.

8. Elektrode nach Anspruch 1 oder der Membranelektrodenanordnung (12) nach Anspruch 6, wobei das Ionomer-zu-Kohlenstoff-Verhältnis zwischen 0,6 und 0,8 liegt.

9. Elektrode nach Anspruch 8 oder der Membranelektrodenanordnung (12) nach Anspruch 8, wobei das lonomer-Kohlenstoff-Verhältnis zwischen 0,6 und 0,7 liegt.

10. Elektrode nach Anspruch 5 oder der Membranelektrodenanordnung (12) nach Anspruch 6, wobei die Elektrode ein Metallgewichtsprozent zwischen 40% und 60% aufweist.

11. Elektrode nach Anspruch 5 oder der Membranelektrodenanordnung (12) nach Anspruch 10, wobei die Elektrode einen Metallgewichtprozent von 50% aufweist.

12. Elektrode nach Anspruch 2 oder der Membranelektrodenanordnung (12) nach Anspruch 6, wobei das lonomer (36) ein Äquivalentgewicht zwischen 800 und 900 aufweist.

13. Elektrode nach Anspruch 2 oder der Membranelektrodenanordnung (12) nach Anspruch 12, wobei das lonomer (36) ein Äquivalentgewicht zwischen 820 und 840 aufweist.

## Revendications

1. Électrode pour cellule électrochimique (10), l'électrode comprenant :
des catalyseurs au platine (32) ;
des particules de support carbonées (34) pour supporter les catalyseurs au platine (32) ; et
un ionomère (36) reliant les catalyseurs au platine (32),
dans lequel l'électrode possède une charge de platine inférieure à 0,2 mg/cm², un rapport ionomère sur carbone entre 0,5 et 0,9 et une épaisseur entre 2 et 5 µm,
**caractérisé en ce que**
l'électrode est formée d'une couche discrète, et l'ionomère (36) est configuré pour relier les catalyseurs au platine (32) à une membrane échangeuse de protons (16).

2. Électrode selon la revendication 1, dans laquelle l'ionomère (36) possède un poids équivalent entre 700 et 1100.

3. Électrode selon la revendication 1, dans laquelle l'électrode possède une charge de platine entre 0,05 mg/cm² et 0,15 mg/cm².

4. Électrode selon la revendication 3, dans laquelle l'électrode possède une charge de platine de 0,1 mg/cm².

5. Électrode selon la revendication 1, dans laquelle l'électrode possède un pourcentage en poids de métal compris entre 20 % et 70 %.

6. Ensemble électrode à membrane (12) comprenant :
une membrane échangeuse de protons (16) ;
une couche cathodique (18) comprenant :
des catalyseurs au platine (32) ;
des particules de support carbonées (34) pour supporter les catalyseurs au platine (32); et
un ionomère (36) reliant les catalyseurs au platine (32),
dans lequel la couche cathodique (18) possède une charge de platine inférieure à 0,2 mg/cm² et un rapport ionomère sur carbone entre 0,5 et 0,9 ; et
une couche anodique (14) comprenant :
des catalyseurs au platine (32) ; et
des particules de support carbonées (34) pour supporter les catalyseurs au platine (32) ; et
un ionomère (36) reliant les catalyseurs au platine (32) ;
dans lequel les couches (14, 18) ont une épaisseur entre 2 et 5 µm,
**caractérisé en ce que**
la couche anodique (14) et la couche cathodique (18) sont formées d'une seule couche discrète et l'ionomère (36) des couches (14, 18) relie les catalyseurs au platine (32) à la membrane échangeuse de protons (16).

7. Ensemble électrode à membrane (12) selon la revendication 6, dans lequel la couche anodique (14) possède une charge de platine inférieure à 0,2 mg/cm² et un rapport ionomère sur carbone entre 0,5 et 0,9.

8. Électrode selon la revendication 1 ou ensemble électrode à membrane (12) selon la revendication 6, dans laquelle/lequel le rapport ionomère sur carbone est entre 0,6 et 0,8.

9. Électrode selon la revendication 8 ou ensemble électrode à membrane (12) selon la revendication 8, dans laquelle/lequel le rapport ionomère sur carbone est entre 0,6 et 0,7.

10. Électrode selon la revendication 5 ou ensemble électrode à membrane (12) selon la revendication 6, dans laquelle/lequel l'électrode possède un pourcentage en poids de métal compris entre 40 % et 60 %.

11. Électrode selon la revendication 5 ou ensemble électrode à membrane (12) selon la revendication 10, dans lequel l'électrode possède un pourcentage en poids de métal de 50 %.

12. Électrode selon la revendication 2 ou ensemble électrode à membrane (12) selon la revendication 6, dans laquelle/lequel l'ionomère (36) possède un poids équivalent entre 800 et 900.

13. Électrode selon la revendication 2 ou ensemble électrode à membrane (12) selon la revendication 12, dans laquelle/lequel l'ionomère (36) possède un poids équivalent entre 820 et 840.
